# EUROPEAN PATENT SPECIFICATION

(11) **EP 2 072 386 B1**
(45) Date of publication and mention of the grant of the patent: **31.08.2011**
(21) Application number: 08021546.0
(22) Date of filing: 11.12.2008
(51) Int. Cl.: B62J 15/02

(54) **Safety release device for supporting a rod**
Sicherheitsauslösevorrichtung zum Lagern einer Strebe
Dispositif de déclencheur de sécurité pour fixer une tige

(30) Priority: 21.12.2007 IT VI20070323
(43) Date of publication of application: 24.06.2009
(73) Proprietor: Passuello, Ivan, 31020 San Zenone Degli Ezzelini TV (IT)
(72) Inventor: Passuello, Ivan, 31020 San Zenone Degli Ezzelini TV (IT)
(74) Representative: Forattini, Amelia

(56) References cited:
- EP-A- 0 987 173
- EP-A- 1 221 407
- EP-A- 1 350 713
- EP-A- 1 834 866
- DE-U1- 20 306 363

## Description

The present invention relates to a safety release device, particularly for supporting a rod and a fork, suitable for fitting fenders.

As is known, the simplest method of mounting a fender supporting rod on a bicycle fork or on the rear stay, consists in fastening the supporting rod to the fork by means of bolts that are inserted in slots provided on the fork or stay of the bicycle.

Such mounting method is practical and cheap, but has drawbacks related mainly to the new safety standards, which in an increasingly strict manner require the supporting rods and the fenders to be able to disengage instantaneously and autonomously in dangerous conditions caused, for example, by accidental collisions with the spokes, for preventing swerving or falls.

These disadvantages have been partly overcome by a device disclosed in Italian Patent Application No. VI2006A000073, which relates to an engagement device that can be associated detachably with a fork and is shaped so that it can be associated with a supporting rod by means of a lever-type locking.

However, such system is not free from drawbacks, which are encountered mainly in the attempt to standardize the system for engagement with the fork, because the latter can be built with shapes and dimensions that vary even considerably among the various manufacturers.

Another limiting aspect of known engagement devices relates to the fact that that they are conceived to act on supporting rods having a very specific diameter, and therefore when this diameter varies it is necessary to use a different engagement device.

EP-A-0987173 discloses a quick release device for engaging the stays of a bicycle mudguard according to the preamble of claim 1.

The aim of the invention is to solve the problems described above by providing a safety release device, which allows to join a supporting rod to a fork while complying with the necessary safety conditions.

Within the scope of this aim, a particular object of the invention is to provide a safety release device that allows immediate and autonomous extraction of the supporting rod in conditions of potential danger for the cyclist.

Another object of the invention is to provide a safety release device that can be applied substantially to all types of fork and to all types of supporting rod, independently of their diameter.

Another object of the invention is to provide a safety release device that has low production times and costs and is advantageous from a purely economic standpoint.

The described aim, as well as the objects mentioned and others that will become better apparent hereinafter, are achieved by a safety release device, particularly for supporting a rod and a fork, as claimed in the appended claims.

Further characteristics and advantages will become better apparent from the description of a preferred but not exclusive embodiment of a safety release device according to the invention, illustrated by way of non-limiting example in the accompanying drawings, wherein:

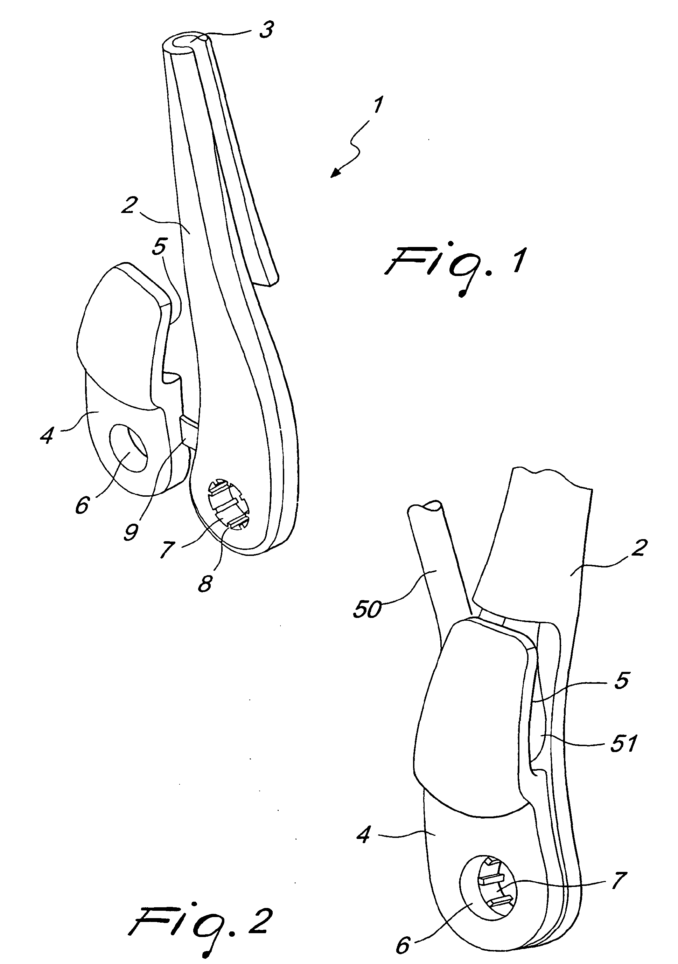

Figure 1 is a perspective view of a safety release device according to the invention;
Figure 2 is a perspective view of a safety release device according to the invention applied to a supporting rod:

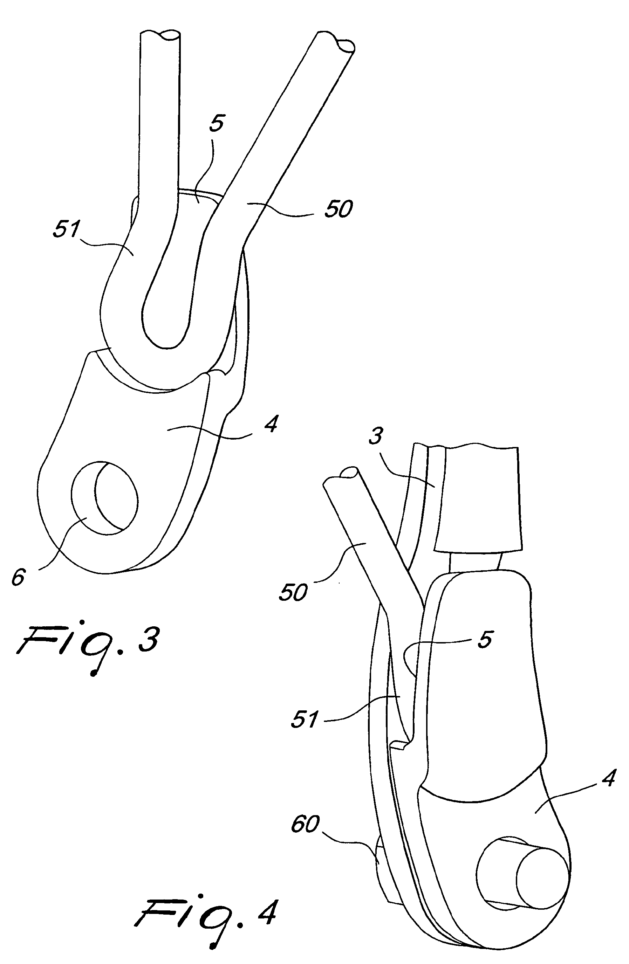

Figure 3 is a perspective view of a portion of a safety release device according to the invention, applied to a supporting rod;
Figure 4 is another perspective view of a safety release device according to the invention applied to a supporting rod;

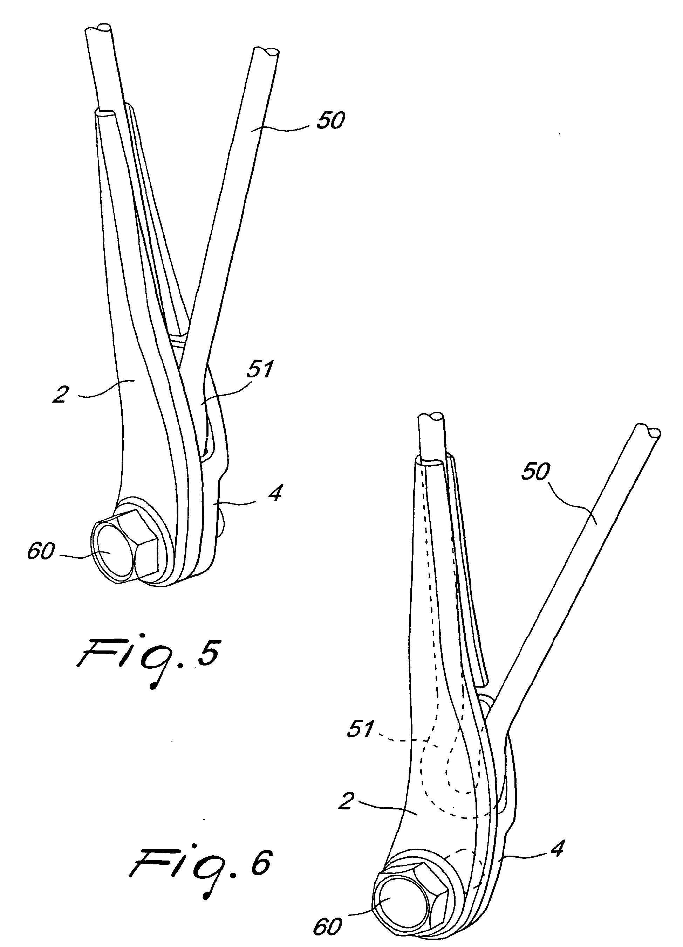

Figure 5 is a further perspective view of a safety release device according to the invention applied to a supporting rod;
Figure 6 is a perspective view, in phantom lines, of a safety release device according to the invention applied to a supporting rod;

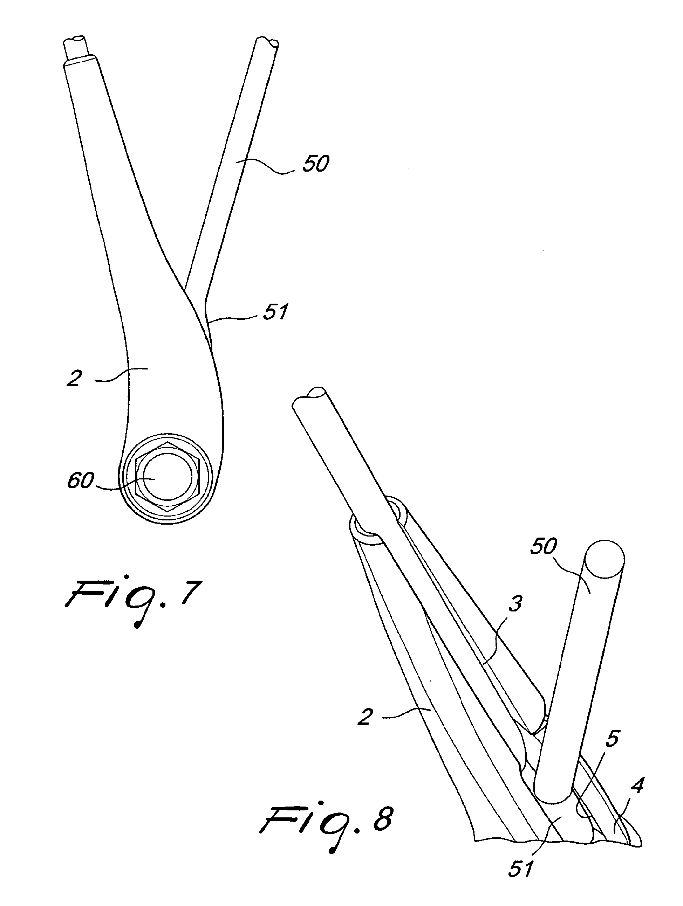

Figure 7 is a side view of a safety release device according to the invention applied to a supporting rod;
Figure 8 is another perspective view of a safety release device according to the invention applied to a supporting rod.

With reference to the cited figures, the safety release device, generally designated by the reference numeral 1, comprises a main body 2, preferably made of molded synthetic material, which can be coupled to a fork and is provided with a receptacle 3 that is formed longitudinally and shaped so as to be able to accommodate a supporting rod 50, by interlocking.

According to the invention, the safety release device 1 comprises a jaw-type locking means, which allows to detachably associate the supporting rod 50 with the main body 2, allowing its release when it is subjected to a traction force that exceeds a preset value.

More particularly, the jaw-type locking means comprises a contoured jaw 4, made of molded synthetic material, which can be associated with the main body 2, and is provided with a seat 5 that accommodates the end portion 51 of the supporting rod 50 and retain it by mechanical interference.

The seat 5 is shaped and sized so that its coupling to the main member 2 leads to the formation of a cavity whose shape is substantially complementary to the shape of the end portion 51 but whose thickness is slightly lower than the thickness of the end portion 51.

A second through hole 6 is provided on the contoured jaw 4 in a position that lies diametrically opposite the seat 5 and can be aligned with a first through hole 7, which is provided with a plurality of lobate teeth 8 and is formed at an end of the main member 2.

The main member 2 and the contoured jaw 4 can be mutually joined monolithically by means of a hinge 9.

The operation of the device according to the invention is as follows.

The supporting rod 50 is accommodated by interlocking in the receptacle 3 and the contoured jaw 4 is coupled to the main member 2 so that the end portion 51 is accommodated in the seat 5.

The second through hole 6 is then aligned with the first through hole 7 and, by means of a bolt 60, which affects them, the main member 2 is coupled to the fork.

The screwing of the bolt 60 causes the progressive tightening of the contoured jaw 4 with respect to the main member 2, and consequently the seat 5 interferes mechanically with the end portion 51, preventing its extraction in normal conditions.

Vice versa, when the supporting rod 50 is subjected to a traction force that is higher than normal, it is extracted from the seat 5 and from the receptacle 3, disengaging from the main member 2.

In practice it has been found that the safety release device according to the invention fully achieves the intended aim and objects, allowing to join a supporting rod to a fork, while allowing its immediate and autonomous extraction in conditions of potential danger for the cyclist.

The safety release device according to the invention can be applied substantially to all kinds of fork and to all kinds of supporting rod, even having a different diameter.

## Claims

1. A safety release device, particularly for supporting a rod and a fork, comprising a supporting rod (50), a main body (2) having a receptacle (3) that is adapted to accommodate a said supporting rod (50); said main body (2) being associable with said fork; a jaw-type locking means (4) for detachably associating said supporting rod (50) with said main body (2); said main body (2) comprising at least one first through hole (7) that is formed at one of its ends, said main body (2) being associable with said fork by means of at least one bolt (60) that can be inserted in said first through hole (7); **characterized in that** said first through hole (7) comprises a plurality of lobate teeth (8) formed on its internal surface.

2. The safety release device according to claim 1, **characterized in that** said jaw-type locking means comprises at least one contoured jaw (4), which has a seat (5) that is adapted to detachably accommodate an end portion (51) of said supporting rod (50), said contoured jaw (4) being associable with said main body (2).

3. The safety release device according to claim 2, **characterized in that** the thickness of said seat (5) is lower than the thickness of said end portion (51) of said supporting rod (50), said contoured jaw (4) retaining by mechanical interference said end portion (51) of the supporting rod (50) when it is associated with said main body (2).

4. The safety release device according to one or more of the preceding claims, **characterized in that** said contoured jaw (4) comprises at least one second through hole (6), which is formed in a diametrically opposite position with respect to said seat (5), said contoured jaw (4) being associable with said main body (2) by means of said bolt (60).

## Patentansprüche

1. Eine Sicherheitsauslösevorrichtung, insbesondere zum Lagern einer Strebe und einer Gabel, umfassend eine Tragstrebe (50), wobei ein Hauptkörper (2) einen Hohlraum (3) hat, der ausgebildet ist, um die Tragstrebe (50) aufzunehmen, wobei der Hauptkörper (2) mit der Gabel assoziiert werden kann; ein backenartiges Verriegelungsmittel (4) zur lösbaren Assoziierung der Tragstrebe (50) mit dem Hauptkörper (2), wobei der Hauptkörper (2) mindestens ein erstes durchgehendes Loch (7) umfasst, das an einem seiner Enden geformt ist, und der Hauptkörper (2) mit der Gabel über mindestens einen Bolzen (60) assoziiert werden kann, der in das erste durchgehende Loch (7) eingeführt werden kann; **dadurch gekennzeichnet, dass** das erste durchgehende Loch (7) eine Vielzahl von gelappten Zähnen (8) umfasst, die an seiner inneren Oberfläche geformt sind.

2. Die Sicherheitsauslösevorrichtung gemäß Anspruch 1, **dadurch gekennzeichnet, dass** das backenartige Verriegelungsmittel mindestens eine konturierte Backe (4) umfasst, die einen Sitz (5) hat, welcher ausgebildet ist, um einen Endabschnitt (51) der Tragstrebe (50) lösbar aufzunehmen, wobei die konturierte Backe (4) mit dem Hauptkörper (2) assoziiert werden kann.

3. Die Sicherheitsauslösevorrichtung gemäß Anspruch 2, **dadurch gekennzeichnet, dass** die Dicke des Sitzes (5) geringer ist als die Dicke des Endabschnitts (51) der Tragstrebe (50), wobei die konturierte Backe (4) durch mechanischen Eingriff den Endabschnitt (51) der Tragstrebe (50) hält, wenn sie mit dem Hauptkörper (2) assoziiert ist.

4. Die Sicherheitsauslösevorrichtung gemäß einem oder mehreren der obigen Ansprüche, **dadurch gekennzeichnet, dass** die konturierte Backe (4) mindestens ein zweites durchgehendes Loch (6) umfasst, das in einer dem Sitz (5) diametral gegenüberliegenden Position angeordnet ist, wobei die konturierte Backe (4) mit dem Hauptkörper (2) durch den Bolzen (60) assoziiert werden kann.

## Revendications

1. Dispositif de déclencheur de sécurité, en particulier pour fixer une tige et une fourche, comprenant une tige de support (50), un corps principal (2) ayant un réceptacle (3) qui est adapté pour loger ladite tige de support (50) ; ledit corps principal (2) pouvant être associé avec ladite fourche ; des moyens de blocage de type mâchoire (4) pour associer de manière détachable ladite tige de support (50) avec ledit corps principal (2) ; ledit corps principal (2) comprenant au moins un premier trou de passage (7) qui est formé au niveau de l'une de ses extrémités, ledit corps principal (2) pouvant être associé avec ladite fourche au moyen d'au moins un boulon (60) qui peut être inséré dans ledit premier trou de passage (7) ; **caractérisé en ce que** ledit premier trou de passage (7) comprend une pluralité de dents à lobes (8) formées sur sa surface interne.

2. Dispositif de déclencheur de sécurité selon la revendication 1, **caractérisé en ce que** lesdits moyens de blocage de type mâchoire comprennent au moins une mâchoire profilée (4) qui a un siège (5) qui est adapté pour loger de manière détachable une partie d'extrémité (51) de ladite tige de support (50), ladite mâchoire profilée (4) pouvant être associée avec ledit corps principal (2).

3. Dispositif de déclencheur de sécurité selon la revendication 2, **caractérisé en ce que** l'épaisseur dudit siège (5) est inférieure à l'épaisseur de ladite partie d'extrémité (51) de ladite tige de support (50), ladite mâchoire profilée (4) retenant par interférence mécanique, ladite partie d'extrémité (51) de la tige de support (50) lorsqu'elle est associée avec ledit corps principal (2).

4. Dispositif de déclencheur de sécurité selon une ou plusieurs des revendications précédentes, **caractérisé en ce que** ladite mâchoire profilée (4) comprend au moins un deuxième trou de passage (6) qui est formé dans une position diamétralement opposée par rapport audit siège (5), ladite mâchoire profilée (4) pouvant être associée avec ledit corps principal (2) au moyen dudit boulon (60).
